# EUROPEAN PATENT SPECIFICATION

(11) **EP 1 577 602 B1**
(45) Date of publication and mention of the grant of the patent: **05.03.2008**
(21) Application number: 05075526.3
(22) Date of filing: 03.03.2005
(51) Int. Cl.: F16M 13/04, F16M 3/00, A01D 34/90, A45F 3/10, A47L 5/36

(54) **Shoulder support for a motor group**
Schulterstativ für eine Motorgruppe
Dispositif de support à l'épaule pour un groupe moteur

(30) Priority: 15.03.2004 IT RE20040020
(43) Date of publication of application: 21.09.2005
(73) Proprietor: Emak S.p.A., 42011 Bagnolo in Piano (Reggio Emilia) (IT)
(72) Inventor: Gatti, Silla, c/o Emak S.p.A, 42011 Bagnolo in Piano Reggio Emilia (IT)
(74) Representative: Corradini, Corrado

(56) References cited:
- EP-A- 0 887 005
- US-A- 5 011 058
- US-A- 5 732 867

## Description

The present invention refers to a shoulder support for a motor group in accordance with the preamble of claim 1.

More specifically, the present invention refers to a backpack structure for supporting over the shoulder a motor generally of the two-stroke endothermal type actuating, through a flexible duct, a tool such as a machine for clearing undergrowth, a hedgetrimmer, a secateur, a blower/sucker, an atomiser jet and the like for gardening tasks.

As known, to cut undergrowth, bushes and grass in difficult-to-reach places hedgetrimmers, in particular shoulder-supported hedgetrimmers, are generally used.

Shoulder-supported hedgetrimmers of the prior art comprise a motor group connected to a shoulder support having a backpack structure that the operator wears through shoulderstraps.

The motor group is connected to a shaft, or rather a transmission tube that is to be supported by the operator's arms, through a rubber-coated flexible sheath inside which the steel coaxial motion transmission cable rotates.

For the purposes of the present invention we shall omit to illustrate in detail the components as well as the operation of the hedgetrimmer since they are already known to men skilled in the art.

The starting of the motor group, which generally comprises a two-stroke endothermal motor, supplied with a petrol-oil mixture, with variable cylinder capacity between 18 and 50 cc, takes place by yanking on the grip of the starter cord.

After the motor group has been put over his shoulder by the operator through straps with the help of possible further fastening belts to allow a better adherence of the operator's backpack.

During work it is possible for the motor to suddenly catch fire due to excessive overheating and/or malfunction, placing the operator wearing it on his shoulders in serious danger.

Due to the shoulder straps, the other fastening belts and the excessive weight (over 8-10 kg), carried on the shoulders, the operation of suddenly abandoning the backpack with which the motor is associated is somewhat difficult and awkward.

Indeed, to abandon the motor group, the cause of danger, it is necessary to suddenly abandon the entire support consisting of the backpack and this requires the freeing of the shoulders from the shoulder straps, in general two in number, to be carried out one shoulder at a time with a small twisting movement of the body, all of this without taking into consideration the time necessary to free oneself from the possible fastening belts to the body.

Therefore, there is a strong requirement to have a shoulder support for a motor group that allows the motor group to be quickly abandoned in the case of imminent danger like, for example, a fire, with extreme ease and rapidity without the need to have to slip off the shoulder straps and free possible belts fixed firmly to the operator's body.

EP 0 887 005 discloses a knapsack type working machine has a first frame and a second frame. A prime mover for driving a working instrument is carried on the first frame. The second frame has a back pad and shoulder straps. The first frame and the second frame are separable from each other.

The first frame has a locking engagement member. The second frame engages with the locking engagement member and has a pivotal locking member urged by a spring in a direction of engagement with the locking engagement member. By releasing the locking engagement member from engagement with the pivotal locking member, the first frame is separated from the second frame.

The purpose of the present invention is that of providing a shoulder support for a motor group having structural and functional characteristics such as to satisfy the aforementioned requirements and at the same time to avoid the aforementioned drawbacks with reference to the prior art, in the context of a simple and rational constructive solution.

Such a purpose is accomplished through a shoulder support for a motor group in accordance with claim 1.

The dependent claims outline preferred and particularly advantageous embodiments of the shoulder support for a motor group according to the invention.

Further characteristics and advantages of the invention shall become clear from reading the following description provided as an example and not for limiting purposes, with the help of the figures illustrated in the attached tables, in which:

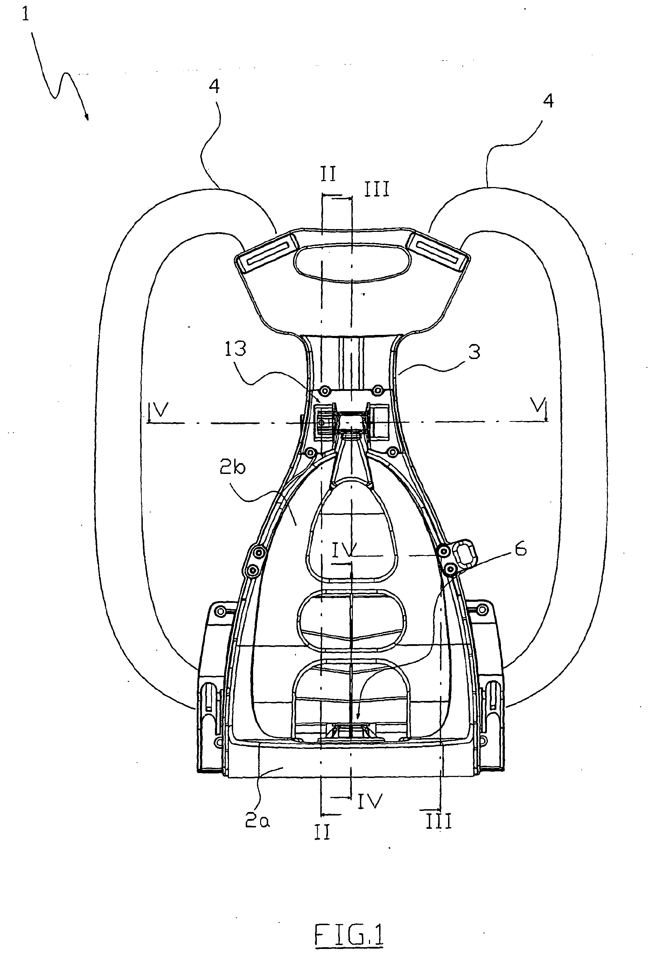

- figure 1 shows a front view of the shoulder support for a motor group in accordance with the present invention;
- figure 2 shows a section of figure 1 according to the plane II-II;
- figures 3A and 3B show a section of figure 1 according to the plane III-III, in unlocked and locked state respectively;

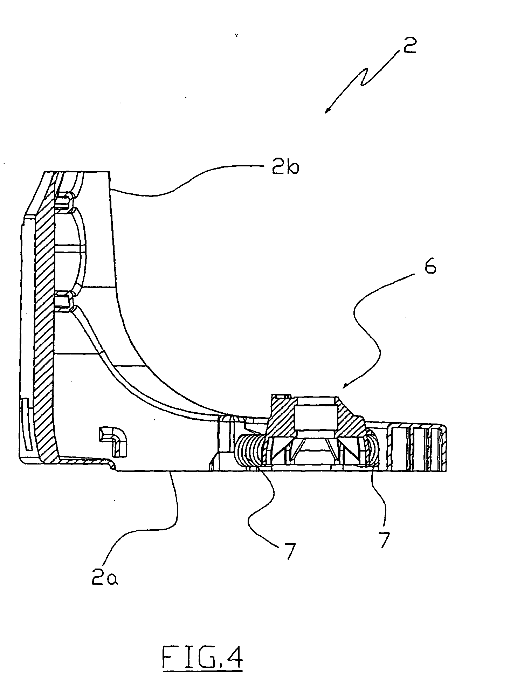

- figure 4 shows a section of figure 1 according to the plane IV-IV;
- figure 5 shows a section of figure 1 according to the plane V-V;

With reference to the aforementioned figures, a shoulder support for a motor group in accordance with the present invention is globally indicated with 1.

Said shoulder support 1, commonly called a backpack, comprises a support body 2 that can selectively be associated with the motor group (not illustrated), a back 3 associated with said support body 2 and support means, in the example a pair of shoulder straps 4, to allow the transportation of the backpack by an operator.

The motor group associated with the support 1 of the present invention supplies energy to a gardening tool (not illustrated) of the type known in the field, such as a hedgetrimmer, a secateur and the like.

The motor group is generally a two-stroke endothermal motor group, fed with a petrol-oil mixture, with a cylinder capacity of about 35 cc.

However, any other type of endothermal motor can be used, for example, as a four-stroke motor.

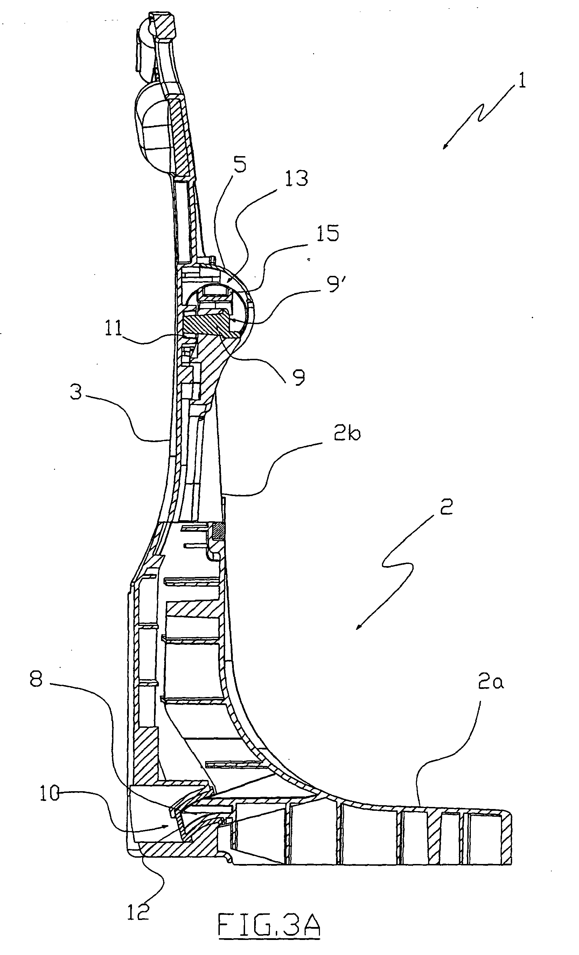

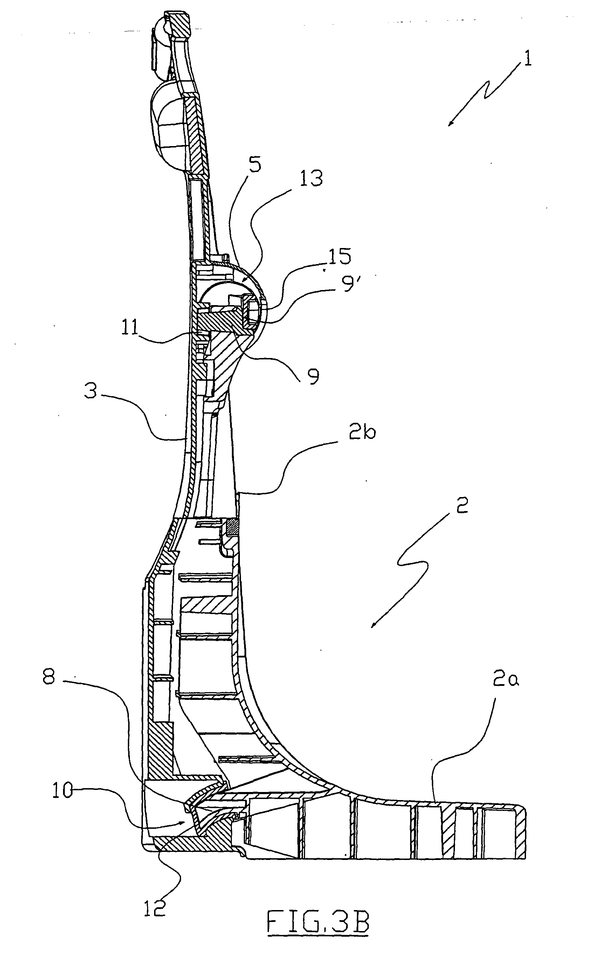

According to the preferred embodiment of the present invention, the support body 2 has a shape, seen in section, substantially joined to form an L, as can be seen in figures 3A and 3B, comprising a support plane 2a arranged horizontally to support the motor and a fastening plane 2b to the back arranged vertically and tapered towards the top.

In the illustrated example, the support plane 2a and the fastening plane 2b are made in a single piece, for example, by moulding.

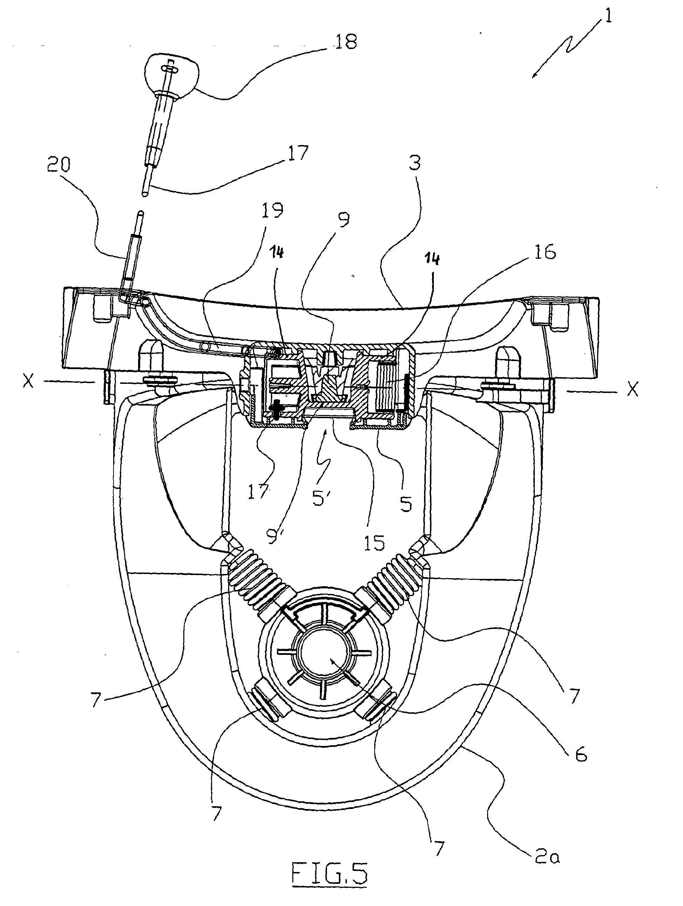

The support plane 2a is provided with a cavity where a connection joint 6 (fig. 5) is arranged, known in the field and therefore not described in greater detail, to receive the motor group.

The connection joint 6 is associated with the support plane 2a through the interposition of a plurality of springs 7 arranged radially about the joint 6.

Such springs 7, moreover, allow the transmission of vibrations of the motor to the backpack 1 and from this to the operator to be avoided.

The support body 2 is provided with a first 8 and second projection 9 shaped to be coupled with corresponding first 10 and second recesses 11 formed in the back 3.

The first projection 8 is arranged in the joining point between the support plane 2a and the fastening plane 2b, whereas the second projection 9 is arranged at the upper free end of the fastening plane 2b, i.e. the upper end distal from the joining point.

As can be seen from figures 3A and 3B, the first projection 8 is made in a single piece with the support body 2 and is equipped at its end with a reinforcing cap 12 made from wear-resistant material.

Preferably, said first projection 8 has an arched configuration suitable for easing the falling to ground of the support body 2 in the presence of the downward push carried out by the weight of the motor.

The second projection is in the form of a nose 9, shaped like a frustum of cone, fitted inside a passage channel formed at the upper end of the fastening plane 2b; the nose 9 is made from strong and hard-wearing material.

The second recess 11, in which the portion of the nose 9 projecting from the fastening plane 2b removably inserts, has a configuration such as to allow the nose 9 integral with the fastening plane 2b to be easily slipped off in the presence of a downward thrust applied on the support plane 2a, such as that applied by the motor when it is positioned on the support plane 2a.

Of course, the configuration of the back 3 and of the fastening plane 2b of the support body 2 are such as to allow a removable shape coupling.

Basically, the back 3 and the fastening plane 2b mirror each other in the contact portions.

In order to keep the back 3 and the support body 2 joined together, in the presence of the downward thrust by the motor housed on the support plane 2a of the support body 2, engagement/disengagement means 13 are foreseen, rotatably associated with the backpack 1, which in a first configuration allow the fastening, and in a second configuration the complete detachment of the support body 2 and, therefore, of the motor.

Basically, the disengagement means 13 reversibly lock the support body 2 against the back 3.

In accordance with the illustrated example, the disengagement means 12 comprise a rotating element, known as a roller, suitable for rotating around a rotation axis (X-X) and consisting of two opposite coaxial hollow cylindrical bodies 14 with a bridge 15 interposed integrally associated with said cylindrical bodies 14 and, therefore, rotating with them, arranged distally from the rotation axis X-X and suitable for respectively taking up a locked position (fig. 3B) and an unlocked position (fig. 3A).

The bridge 15, in the illustrated example, has a channel-shaped configuration having the concavity facing outwards with respect to the rotation axis X-X.

In the locked position illustrated in figure 3B, the part of bridge 15 proximal to the rotation axis X-X is in abutment against the nose 9.

In particular, the nose portion 9 opposite the one inserted in the second recess 11 has a headpiece 9' having a configuration such as to allow a shape coupling with the bridge 15, when they are in abutment (fig. 3B).

In the unlocked position, the bridge 15 totally frees the headpiece 9' of the nose 9, as can be seen in figure 3A.

As can be seen in figure 5, in one of the hollow cylindrical bodies 14 of the roller 13 there is a stop spring 16 associated at one end with the back 3 and at the other end with the roller 13.

The spring 16 applies a twisting action suitable for keeping the roller 13 in the locked position with the bridge 15 in abutment against the headpiece 9' of the nose 9.

To unlock the bridge 15 it is necessary to apply a rotation action to the roller 13 in contrast to the twisting applied by the spring 16.

For such a purpose, a cord 17 is associated with the roller 13 wound around the upper portion of at least one of the two cylindrical bodies 14 for at least one arc of circumference sufficient for allowing a rotation of the roller 13 such as to completely unlock the bridge 15, through a yank to the cord 17 itself.

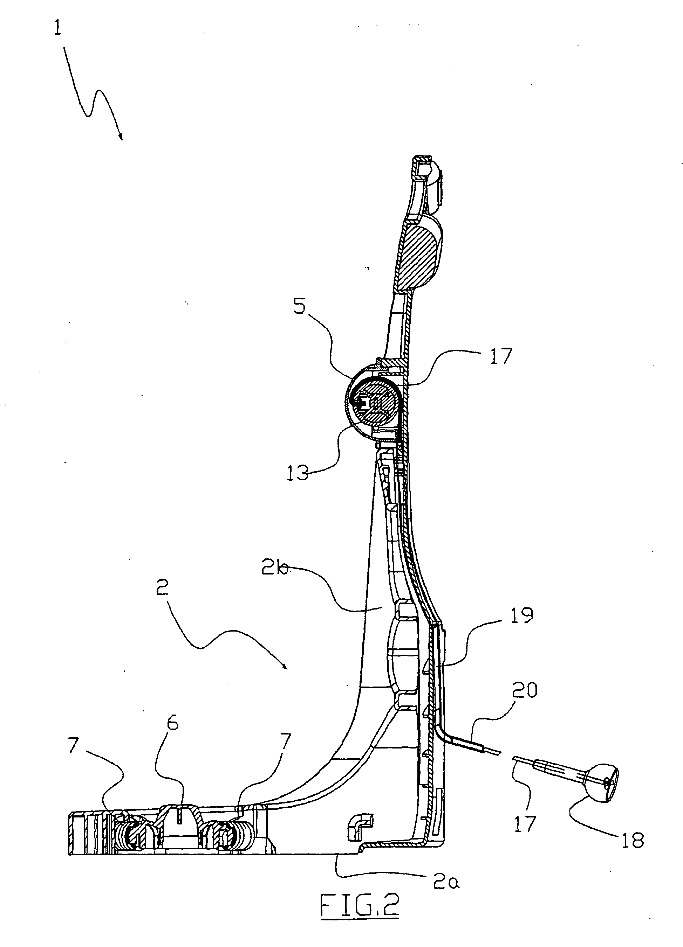

Such a cord 17 is provided, at the end opposite the one wound onto the roller 13, with a grip 18 and, moreover, to prevent the cord 17 from being able to hamper the work carried out by the operator, it is slotted into a channel 19 formed in the back 3 (fig. 2).

In addition, to ease the sliding of the cord 17 inside the channel 19, the cord 17 can be suitably sheathed inside a sheath 20.

To protect the roller 13 from the outside it is possible to foresee the adoption of a protective cover 5 associated with the back 3 not interfering with said roller 13.

Such a protective cover 5 can have an opening 5' to make the roller 13 at least partially accessible.

Operatively, in the condition of normal use, the bridge 15 is in locked condition in contrast with the headpiece 9' of the nose 9 (fig. 3B) thanks to the twisting force applied by the spring 16.

In this position, the fastening plane 2b of the support body 2 is associated with the back 3, with the first 8 and second projection 9 inserted in the respective recesses 10, 11 of the back 3.

In the presence of imminent danger deriving from the extreme proximity between the operator and the motor, for example the motor itself catching fire, the operator holds the grip 18 and yanks the cord 16 that, in the locked position, winds around the upper semicircumference portion of one of the two cylindrical bodies 14 of the roller 13.

This action in contrast to the action applied by the spring 16 allows the roller 13 and consequently the bridge 15 to rotate so as to instantly unlock the nose 9 and, therefore, the entire support body 2.

The weight of the motor associated with the support plane 2a applies a downward thrust such as to cause the detachment of the entire support body 2 from the back 3 pulling both the nose 9, now free from the bridge 15 in abutment, and the first projection 8 away from the respective recesses 10, 11 and causing the subsequent falling of the support body 2 with the motor.

The operator, in practice, remains only with the back 3 of the backpack 1 on his back.

The restoration of the support body 2 on the back 3 is easy to carry out, since one only has to reposition the support body 2 with the projections 8, 9 in the respective recesses 10, 11 and keep the cord 17 pulled to then release it so as to allow the spring 16 to take the bridge 15 back into the locked position.

As can be appreciated from what has been described, the shoulder support for a motor group according to the present invention allows the requirements to be satisfied and the drawbacks mentioned in the introductory part of the present description with reference to the prior art to be overcome.

Of course, a man skilled in the art can bring numerous modifications and variants to the shoulder support for a motor group described above in order to satisfy contingent and specific requirements, all of which are covered by the scope of protection of the invention, as defined by the following claims.

## Claims

1. Shoulder support (1) for a motor group comprising a support body (2) that can selectively be associated with said motor group, a back (3) associated with said support body (2), support means (4) associated with the back to allow the transportation of said support, wherein said support body (2) is removable through the actuation of engagement/disengagement means (13), associated with said support (1), suitable for causing the complete detachment of the support body (2) from the support (1) itself, when the motor group is associated with said support body (2), **characterised in that** said engagement/disengagement means (13) comprise an element rotating according to a rotation axis (X-X) consisting of two opposite coaxial hollow cylindrical bodies (14) with a bridge (15) interposed integrally associated with said cylindrical bodies (14) and arranged distally from the rotation axis (X-X) and suitable for respectively taking up a locked position and an unlocked position.

2. Support (1) according to claim 2, wherein said bridge (15) is in abutment against a portion of said support body (2), when it is in locked position.

3. Support (1) according to claim 1, wherein said support body (2) comprises a support plane (2a) extending horizontally and a fastening plane (2b) to said back (3) extending vertically.

4. Support (1) according to claim 1, wherein said support body (2) comprises a first (8) and a second projection (9) suitable for engaging with mutual recesses (10, 11) formed on the back (3).

5. Support (1) according to claim 5, wherein said second projection consists of a nose (9) fitted in a passage channel formed on said support body (2).

6. Support (1) according to claim 2, wherein inside at least one of said cylindrical bodies (14) a stop spring (16) is arranged suitable for keeping the bridge (15) in said locked position.

7. Support (1) according to claim 2, wherein the actuation of said engagement/disengagement means (13) takes place through a cord (17) of inextensible material associated and wound around the upper portion of at least one of the two cylindrical bodies (14) for at least an arc of circumference sufficient to allow a rotation of the rotating element (13) such as to completely unlock the bridge (15), through a yank to said cord (17).

8. Support (1) according to claim 8, wherein said cord (17) is provided, at its free end opposite the one associated with the cylindrical body (14), with a grip (18).

9. Support (1) according to claim 1, wherein said motor group comprises an endothermal motor that can be fed with flammable material.

10. Support (1) according to claim 1, wherein said support body (2) is provided with a connection joint (6) to said motor group.

11. Support (1) according to claim 1, wherein said support means comprise a pair of shoulder straps suitable for being worn by an operator.

## Patentansprüche

1. Schulterhalter (1) für einen Motorblock, der einen Stützkörper (2) beinhaltet, der dem oben erwähnten Motorblock selektiv zugeordnet werden kann, ein Hinterteil (3), das mit dem oben genannten Stützkörper (2) verbunden ist, Stützvorrichtungen (4), die am Hinterteil angeschlossen sind, um den Transport des oben erwähnten Halters zu ermöglichen, in dem der oben genannte Stützkörper (2) durch Betätigung von Einrück-/Ausrückelementen (13), die mit dem oben erwähnten Halter (1) verbunden sind, abgenommen werden kann, Einrück-/Ausrückelemente, die dazu geeignet sind, die vollständige Abkopplung des Stützkörpers (2) vom Halter (1) selbst zu erzeugen, wenn der Motorblock mit dem oben genannten Stützkörper (2) verbunden ist, Stützkörper, der sich durch den Umstand auszeichnet, dass die oben erwähnten Einrück-/Ausrückelemente (13) ein Teil beinhalten, das sich gemäß einer Drehachse (X-X) dreht, die von zwei hohlen koaxialen zylinderförmigen Körpern (14) gebildet wird, denen eine dazwischen geschobene Brücke (15) entgegengesetzt ist, die den obengenannten zylinderförmigen Körpern (14) vollständig zugeordnet und sich in Bezug auf die Drehachse (X-X) in einer distalen Stellung befindet und eine Blockierstellung beziehungsweise eine Freigabestellung einzunehmen in der Lage ist.

2. In Übereinstimmung mit Anspruch 1 stehender Halter (1), bei dem die oben genannte Brücke (15) eine Schulter gegen einen Teil des oben erwähnten Stützkörpers (2), wenn sich diese in Blockierstellung befindet, ist.

3. In Übereinstimmung mit Anspruch 1 stehender Halter (1), bei dem der oben erwähnte Stützkörper (2) eine Stützfläche (2a) von waagerechter Ausdehnung und eine Spannplatte (2b) am oben genannten Hinterteil (3) von senkrechter Ausdehnung beinhaltet.

4. In Übereinstimmung mit Anspruch 1 stehender Halter (1), bei dem der oben erwähnte Stützkörper (2) einen ersten Vorsprung (8) und einen zweiten Vorsprung (9) enthält, die geeignet sind, in gegenseitigen, am Hinterteil (3) ausgeführten Hohlräumen (10,11) einzurücken.

5. In Übereinstimmung mit Anspruch 4 stehender Halter (1), bei dem der oben erwähnte zweite Vorsprung (9) von einer Nase (9) gebildet wird, die in einem am oben genanten Stützkörper (2) ausgeführten Durchgangskanal eingesetzt ist.

6. In Übereinstimmung mit Anspruch 1 stehender Halter (1), bei dem im Innern von mindestens einem der oben erwähnten zylinderförmigen Körper (14) eine Rastfeder (16) angebracht ist, die geeignet ist, die Brücke (15) in der oben genannten Blockierstellung festzuhalten.

7. In Übereinstimmung mit Anspruch 1 stehender Halter (1), bei dem die Betätigung der oben erwähnten Einrück-/Ausrückelemente (13) durch eine Schnur (17) aus nicht dehnbarem Material erfolgt, die mit dem oberen Teil von mindestens einem der beiden zylinderförmigen Körper (14) verbunden bzw. in einem ausreichenden Kreisbogen um ihn gewickelt ist, um eine derartige Drehung des Drehelements (13) zu ermöglichen, dass die Brücke (15), durch einen heftigen Ruck an der oben genannten Schnur (17), vollständig gelöst wird.

8. In Übereinstimmung mit Anspruch 7 stehender Halter (1), an dessen freien Endstück, das dem zylinderförmigen Körper (14) gegenüberliegt, die oben erwähnte Schnur mit einer Greifvorrichtung (18) ausgerüstet ist.

9. In Übereinstimmung mit Anspruch 1 stehender Halter (1), bei dem der oben genannte Motorblock einen Verbrennungsmotor, der mit entflammbarem Material betrieben werden kann, enthält.

10. In Übereinstimmung mit Anspruch 1 stehender Halter (1), bei dem der oben erwähnte Stützkörper (2) mit einem Verbindungsstück (6) für den oben erwähnten Motorblock ausgerüstet ist.

11. In Übereinstimmung mit Anspruch 1 stehender Halter (1), bei dem die oben genannte Stützvorrichtung ein Paar Träger enthält, die von einem Bediener angelegt werden können.

## Revendications

1. Support (1) à épaulement pour un groupe moteur comprenant un corps (2) de support pouvant être associé sélectivement au groupe moteur susmentionné, une partie (3) postérieure reliée au corps susmentionné (2) de support, des organes (4) de support reliés à la partie postérieure pour permettre le transport du support susmentionné, dans lequel le corps (2) susmentionné de support est amovible moyennant l'actionnement d'éléments (13) d'emboîtement/déboîtement, reliés au support (1) susmentionné, aptes à produire le décrochage complet du corps (2) de support du support (1), lorsque le groupe moteur est relié au corps (2) susmentionné de support, **caractérisé par le fait que** les éléments (13) susmentionnés d'emboîtement/déboîtement comprennent un organe qui pivote selon un axe (X-X) de rotation composé de deux corps (14) cylindriques creux coaxiaux opposés avec un pont (15) interposé associé intégralement aux corps (14) cylindriques susmentionnés et situé en position distale par rapport à l'axe (X-X) de rotation et apte à prendre respectivement une position de blocage et une position de déblocage.

2. Support (1) conforme à la revendication 1, dans lequel le pont (15) susmentionné est une butée contre une partie du corps (2) susmentionné de support, quand il est en position de blocage.

3. Support (1) conforme à la revendication 1, dans lequel le corps (2) susmentionné de support comprend un plan (2a) de support à extension horizontale et un plan (2b) de fixation sur la partie (3) postérieure susmentionnée à extension verticale.

4. Support (1) conforme à la revendication 1, dans lequel le corps (2) susmentionné de support comprend une première saillie (8) et une deuxième saillie (9) aptes à s'emboîter individuellement dans des cavités (10, 11) pratiquées dans la partie (3) postérieure.

5. Support (1) conforme à la revendication 4, dans lequel la deuxième saillie (9) susmentionnée est constituée d'un ergot (9) introduit dans une gorge de passage pratiquée dans le corps (2) de support susmentionné.

6. Support (1) conforme à la revendication 1, dans lequel à l'intérieur d'au moins un des corps (14) cylindriques susmentionnés est positionné un ressort (16) d'arrêt apte à maintenir le pont (15) dans la position de blocage susmentionnée.

7. Support (1) conforme à la revendication 1, dans lequel l'actionnement des éléments (13) d'emboîtement/déboîtement susmentionnés a lieu au moyen d'un cordon (17) en matériau inextensible relié et enroulé autour de la partie supérieure d'au moins un des deux corps (14) cylindriques sur un arc de circonférence au moins suffisant à permettre une rotation de l'élément (13) tournant de manière à débloquer entièrement le pont (15), en appliquant une violente secousse au cordon (17) susmentionné.

8. Support (1) conforme à la revendication 7, dans lequel, à son extrémité libre opposée à celle reliée au corps (14) cylindrique, le cordon (17) susmentionné est équipé d'un dispositif (18) de prise.

9. Support (1) conforme à la revendication 1, dans lequel le groupe moteur susmentionné comprend un moteur endothermique qui peut être alimenté avec un matériau inflammable.

10. Support (1) conforme à la revendication 1, dans lequel le corps (2) susmentionné de support est équipé d'un joint (6) de liaison au groupe moteur susmentionné.

11. Support (1) conforme à la revendication 1, dans lequel le dispositif de support susmentionné comprend une paire de bretelles aptes à être portées par un opérateur.
